Europäisches Patentamt

European Patent Office

Office européen des brevets

(19)

(11) Veröffentlichungsnummer: **0 268 818 B1**

(12)
# EUROPÄISCHE PATENTSCHRIFT

(45) Veröffentlichungstag der Patentschrift: **17.07.91**

(21) Anmeldenummer: **87115287.2**

(22) Anmeldetag: **19.10.87**

(51) Int. Cl.5: **G01S 15/89, G10K 11/32, G10K 11/34**

(54) **Vorrichtung zum Senden und Empfangen von Ultraschall-Signalen.**

(30) Priorität: **31.10.86 DE 3637141**

(43) Veröffentlichungstag der Anmeldung:
**01.06.88 Patentblatt 88/22**

(45) Bekanntmachung des Hinweises auf die
Patenterteilung:
**17.07.91 Patentblatt 91/29**

(84) Benannte Vertragsstaaten:
**AT CH DE FR GB LI NL**

(56) Entgegenhaltungen:
EP-A- 0 177 407    DE-A- 3 309 218
FR-A- 2 332 531    GB-A- 2 005 833
US-A- 3 911 730    US-A- 4 200 858

ACOUSTICAL IMAGING, Band 8, 1980, Seiten
69-95, A.F. Metherell, Plenum Press; R.G.
SWARTZ et al.: "Monolithic silicon-PVF2 piezoelectric arrays for ultrasonic imaging"

(73) Patentinhaber: **Siemens Aktiengesellschaft**
**Wittelsbacherplatz 2**
**W-8000 München 2(DE)**

(72) Erfinder: **Breimesser, Fritz, Dipl.-Ing.**
**Dahlmannstrasse 124**
**W-8500 Nürnberg 20(DE)**
Erfinder: **Granz, Bernd, Dr.**
**Leonhardstrasse 6**
**W-8501 Oberasbach(DE)**

**Beschreibung**

Die Erfindung bezieht sich auf eine Vorrichtung zum Senden und Empfangen von Ultraschall-Signalen für ein nach dem Impuls-Echo-Verfahren arbeitendes Ultraschall-Bildgerät.

Bei den in der medizinischen Ultraschall-Diagnostik verwendeten bildgebenden Verfahren, die nach dem Impuls-Echo-Prinzip arbeiten wird in erster Linie die Information der bei 180° rückreflektierten bzw. rückgestreuten Ultraschall-Signale ausgewertet. Ultraschall-Signale, die bei einem anderen Winkel als bei 180° gestreut bzw. reflektiert werden, enthalten jedoch ebenfalls wertvolle Information über die Gewebsstruktur und können zur Verbesserung der Bildqualität beitragen.

Aus "Ultrasonic Imaging, 3, (1981), Seiten 62-82" ist eine Vorrichtung zum Senden und Empfangen von Ultraschall-Signalen bekannt, bei der ein Ultraschall-Sender, dessen Sendefläche die gekrümmte Hüllfläche eines Kegelstumpfes bildet, einen Ultraschall-Empfänger mit kreisscheibenförmiger Empfangsfläche ringförmig umschließt. Das piezoelektrische Element des Ultraschall-Senders besteht aus Polyvinylidenfluorid PVDF, da dies aufgrund seiner mechanischen Flexibilität besonders zum Herstellen von großflächigen Wandlern mit gekrümmter Oberfläche geeignet ist. Durch diese Gestaltung der Sendefläche wird ein auf der Kegelachse linear ausgedehnter Fokus erzeugt. Die auf diesen Linienfokus befindlichen punktförmigen Gewebsstrukturen erzeugen dann kugelförmige Streuwellen, von dem im wesentlichen der unter dem Winkel 180° - 0, wobei 0 der Kegelöffnungswinkel ist, gestreute Anteil in den Empfänger zurückgelangt. Durch diese Gestaltung und Anordnung der Ultraschall-Sender und -Empfänger wird eine hohe Schärfentiefe erzielt. Durch eine Linearbewegung der gesamten Vorrichtung überstreicht der Linienfokus im Körper eine Ebene und es kann ein zweidimensionales Schnittbild erzeugt werden. Bei dieser Vorrichtung ist jedoch der Streuwinkel, unter dem die Ultraschall-Signale empfangen werden, durch die geometrische Konstruktion des Ultraschall-Senders vorgegeben. Eine Diskriminierung des Ultraschall-Bildes nach unterschiedlichen Streuwinkeln kann somit während des Betriebs nicht erfolgen.

Aus "Medical Physics, Vol. 3, No. 5, Sept./Okt. 1976, Seiten 312-318, insbesondere Seiten 317 -318" ist eine Vorrichtung zum Senden und Empfangen von Ultraschall-Signalen bekannt, bei der der Ultraschall-Sender und der Ultraschall-Empfänger ebenfalls räumlich voneinander getrennt aufgebaut sind. Ultraschall-Empfänger und Ultraschall-Sender bestehen dabei jeweils aus einer Vielzahl von Wandlerelementen. Der Ultraschall-Empfänger ist ein lineares Array, das von einem als Ultraschall-Sender dienenden ringförmigen Array umgeben ist. Den einzelnen Wandlerelementen des ringförmigen Arrays werden entsprechend ihrer Winkellage relativ zur Längsrichtung des linearen Arrays mit unterschiedlicher Sendeleistung betrieben. Dabei emittieren die Wandlerelemente, deren Verbindungslinie zum Mittelpunkt des ringförmigen Arrays parallel zur Längsrichtung des linearen Arrays liegt, mit maximaler Schallintensität. Auf diese Weise wird ein Schallstrahl erzeugt, der in der Ebene, die senkrecht zur Sendefläche und parallel zur Längsrichtung des linearen Arrays liegt, breit gefächert und in der dazu senkrechten Richtung schmal ist. Zusätzlich kann der gesendete Schallstrahl ebenso wie der Fokus des als Ultraschall-Empfängers dienenden linearen Arrays durch elektronische Verzögerungseinrichtungen parallel zur Längsrichtung des linearen Arrays geschwenkt werden. Mit dieser Vorrichtung erhält man eine gute Auflösung in beiden lateralen Richtungen. Mit der genannten Vorrichtung werden zwar Ultraschall-Signale aus einem, dem Schwenkbereich des linearen Arrays zugeordneten Winkelbereich empfangen, jedoch werden die unter verschiedenen Streuwinkeln gestreuten bzw. reflektierten Ultraschall-Signale zu einem gemeinsamen zweidimensionalen Bild zusammengesetzt.

US-A-3 911 730 beschreibt ein Ultraschallwandler-System, bei dem ein ein-oder zweidimensionales Array von Wandlern vorgesehen ist, die in Gruppen aufgeteilt sind. Ausgewählte Gruppen werden derart angesteuert, daß sie Schallstrahlen erzeugen, die in einem Nahfeld-Fokalbereich ein Interferenzmuster bilden. Dabei werden die Gruppen in einer vorbestimmten Richtung schrittweise weitergeschaltet; so erhält man eine Abtastung beispielsweise der Oberfläche eines Werkstücks. In einer besonderen Ausgestaltung des Ultraschallwandler-Systems, wie sie beispielsweise in der Figur 6 dargestellt ist, ist ein in x-Richtung ausgedehntes, lineares Array vorgesehen, das aus einer Vielzahl einzelner Wandlerelemente besteht. An den beiden Längsseiten dieses linearen Arrays ist jeweils eine Vielzahl von Wandlern in y-Richtung übereinander angeordnet. Diese Wandler bilden zwar in y-Richtung neben dem linearen Array eine Vielzahl von Spalten, aber keine Matrix, sondern sind gemäß Figur 6 sowie dem zugehörigen Beschreibungsteil als Bänder in x-Richtung ausgestaltet.

In einer Ultraschallkamera gemäß FR-A 2 332 531 ist ein lineares Array aus Ultraschall-Empfängern vorgesehen, zu dessen beiden Seiten Ultraschall-Sender derart angeordnet sind, daß sie gemeinsam mit den Ultraschall-Empfängern auf einem Teil einer Zylinderoberfläche liegen. Das Empfangsarray und die Sendearrays sind dabei lückenlos miteinander verbunden. Bei dieser bekannten Ultraschallkamera werden die Ultraschall-Sender jeweils in Dreiergruppen angeregt und die Brennlinie der Ultraschallwelle entspricht einem Teil der Zylinderachse. Die von den Ultraschall-Sendern stammenden, vom Untersuchungsobjekt reflektierten Ultraschall-Strahlen werden nur vom linearen Array zwischen den Sendern empfangen.

Aus "ACOUSTICAL IMAGING, Band 8, 1980, Seiten 69-95, A.F. Metherell, Plenum Press; R.G. Swartz u.a.: Monolithic silicon-PVF2 piezoelectric arrays for ultrasonic imaging" sind lineare und zwei-dimensionale Arrays aus Polyvinylidenfluorid bekannt, die in Vorrichtungen zum Senden und Empfangen von Ultraschall-Signalen Verwendung finden.

Der Erfindung liegt nun die Aufgabe zugrunde, eine Vorrichtung zum Senden und Empfangen von Ultraschall-Signalen anzugeben, mit der Echosignale aus einem breiten Winkelbereich empfangen werden können und die eine Diskriminierung der empfangenen Ultraschall-Signale hinsichtlich ihres Streuwinkels ermöglicht.

Die genannte Aufgabe wird erfindungsgemäß gelöst durch die Merkmale des Anspruchs 1. Durch diese Gestaltungsmerkmale ist gewährleistet, daß die im untersuchten Objekt unter einem kleineren Winkel als 180° gestreuten und reflektierten Ultraschall-Signale empfangen werden können. Der minimale Streuwinkel unter dem die gestreuten Ultraschall-Signale noch empfangen werden können, hängt im wesentlichen von der Ausdehnung des matrixförmigen Arrays, von der Tiefenlage des vom Ultraschall-Empfänger erzeugten Empfangs-Fokus im Objekt und von der geometrischen Anordnung des matrixförmigen Arrays relativ zum linearen Array ab. Die einzelnen Wandlerelemente einer Zeile des matrixförmigen Arrays empfangen je nach ihrer Lage in der Zeile Streusignale aus einem gegebenen Fokus-Bereich im Objekt unter verschiedenen Winkeln. Dadurch können durch geeignete schaltungstechnische Maßnahmen mehrere Ultraschall-Bilder erzeugt werden, zu deren Aufbau Ultraschall-Signale aus jeweils unterschiedlichen Streuwinkelbereichen beigetragen haben.

In einer besonders vorteilhaften Ausgestaltung der Erfindung ist neben den beiden Seiten des als Ultraschall-Sender dienenden linearen Arrays jeweils ein als Ultraschall-Empfänger dienendes matrixförmiges Array angeordnet. Insbesondere kann es bei der Untersuchung von Objekten mit gekrümmter Oberfläche zweckmäßig sein, die Empfangsfläche des matrixförmigen Arrays gegen die Sendefläche des linearen Arrays zu neigen.

Durch den getrennten Aufbau von Ultraschall-Sender und Ultraschall-Empfänger können die für den Sender und den Empfänger jeweils verwendeten piezoelektrischen Materialien unterschiedlich gewählt werden. Für Ultraschall-Wandlerelemente, die in erster Linie zum Senden verwendet werden soll, sind dabei wegen ihrer hohen relativen Dielektrizitätszahl piezokeramische Werkstoffe besonders geeignet. Bei einer vorteilhaften Gestaltung des Ultraschall-Empfängers besteht der piezoelektrisch aktive Bereich der Empfangswandler aus polarisiertem Polyvinylidenfluorid PVDF.

In einer vorteilhaften Ausgestaltung der Erfindung ist es zweckmäßig, das lineare Array zusätzlich als Ultraschall-Empfänger zu verwenden. Damit ist es möglich, das mit den Streusignalen aus unterschiedlichen Winkeln jeweils erzeugte Ultraschall-Bild mit dem normalen und in der Praxis vertrauten, durch ein lineares Array als Sende-/Empfangswandler erzeugten Ultraschall-B-Bild zu vergleichen.

Zur genaueren Erläuterung der Erfindung wird auf die Zeichnung verwiesen, in deren

Figur 1
eine Vorrichtung gemäß der Erfindung schematisch dargestellt ist.
Figuren 2 und 3
zeigen zwei besonders vorteilhafte geometrische Anordnungen des linearen Arrays und der matrixförmigen Arrays und in
Figur 4
ist eine bevorzugte Betriebsweise der erfindungsgemäßen Vorrichtung veranschaulicht. In
Figur 5
ist der bevorzugte Aufbau des piezoaktiven Bereiches eines matrixförmigen Arrays schematisch im Schnitt gezeigt.

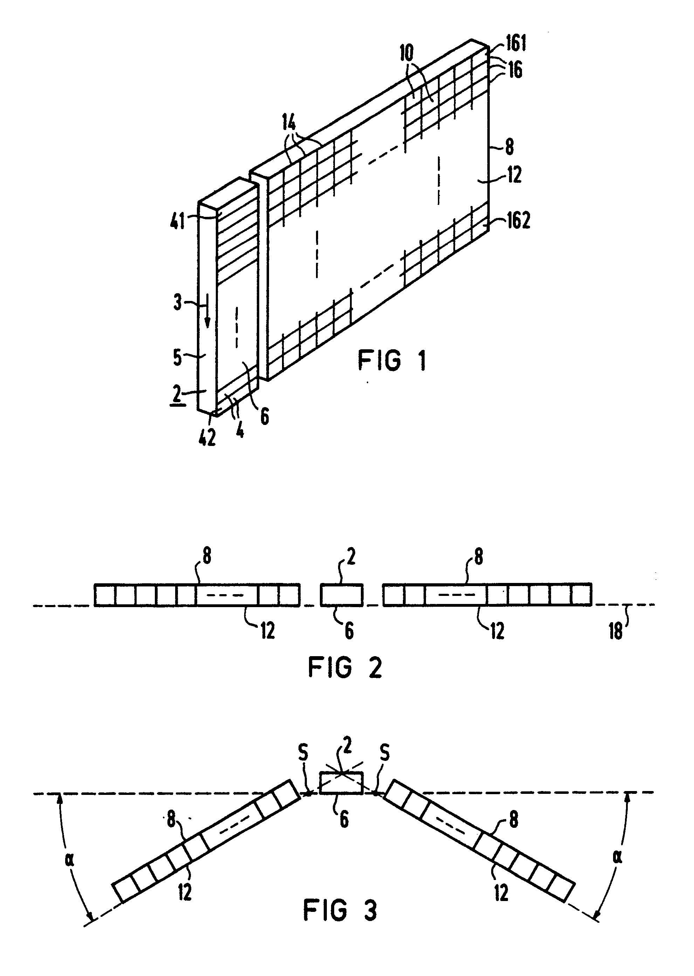

Gemäß Figur 1 enthält die Vorrichtung zum Senden und Empfangen von Ultraschall-Signalen als Ultraschall-Sender ein lineares Array 2. Das lineare Array 2 enthält eine Vielzahl von in Längsrichtung 3 hintereinander angordneten Wandlerelementen 4. Neben einer der Seitenflächen 5, die parallel zur Längsrichtung 3 und senkrecht zur Sendefläche 6 des linearen Arrays 2 liegen, ist ein matrixförmiges Array 8 angeordnet, das eine Vielzahl von Wandlerelementen 10 enthält, die in zueinander senkrechten Spalten 14 und Zeilen 16 geordnet sind. Die Spalten 14 verlaufen annähernd parallel zur Längsrichtung 3 des linearen Arrays 2. Die Ausdehnung des matrixförmigen Arrays 8 in Längsrichtung 3 ist wenigstens annähernd gleich der Länge des linearen Arrays 2. Die erste und die letzte Zeile 161 bzw. 162 des matrixförmigen Arrays 8 ist dabei jeweils annähernd in Höhe des ersten bzw. letzten Wandlerelementes 41 bzw. 42 des linearen Arrays 2 angeordnet. Das matrixförmige Array 8 dient als Ultraschall-Empfänger und seine Empfangsfläche 12 und die Sendefläche 6 des linearen Arrays 2 liegen in der Ausführungsform gemäß Figur 1 in einer gemeinsamen Ebene.

In einer bevorzugten Ausführungsform besteht der piezoelektrisch aktive Bereich der Wandlerelemente 4 des linearen Arrays 2 aus einem piezokeramischen Werkstoff, beispielsweise Blei-Zirkonat-Titanat PZT. Ein mit piezokeramischen Sendewandlern versehenes lineares Array 2 hat beispielsweise eine Frequenzbandbreite von etwa 0,5 MHz und eine Mittenfrequenz im Bereich von etwa 2 bis 10 MHz. Je nach Anwendungsfall kann man entsprechend der gewünschten Mittenfrequenz das passende lineare Array 2 auswählen und austauschen. Die Wandlerelemente 10 des matrixförmigen Arrays 8 enthalten als piezoaktiven Werkstoff vorzugsweise polarisiertes Polyvinylidenfluorid PVDF. Ein mit piezopolymeren Empfangswandlern versehenes matrixförmiges Array 8 hat eine hohe Frequenzbandbreite von etwa 10 MHz und kann als Ultraschall-Empfänger für nahezu alle in der medizinischen Diagnostik üblichen Ultraschall-Frequenzen eingesetzt werden.

In einer bevorzugten Ausführungsform enthält das lineare Array 2 beispielsweise etwa 100 Wandlerelemente und das matrixförmige Array 8 ebenfalls etwa 100 × 100 Wandlerelemente. Die Anzahl der Zeilen 16 des matrixförmigen Arrays 8 muß jedoch nicht notwendigerweise mit der Anzahl der Wandlerelemente des linearen Arrays 2 übereinstimmen.

In der Anordnung nach Figur 2 sind neben dem linearen Array 2 zwei matrixförmige Arrays 8 vorgesehen. Die Sendefläche 6 des linearen Arrays 2 und die Empfangsflächen 12 des matrixförmigen Arrays 8 bilden dabei eine gemeinsame Ebene 18.

In der vorteilhaften Ausführungsform nach Figur 3 sind die Empfangsflächen 12 der matrixförmigen Arrays 8 gegen die Sendefläche 6 des linearen Arrays 2 um einen spitzen Winkel $\alpha$ geneigt. Die Schnittgeraden der durch die Sendefläche 6 gebildeten Ebene mit den durch die Empfangsflächen 12 gegebenen Ebenen verlaufen senkrecht zur Zeichenebene und somit parallel zur Längsrichtung 3 des linearen Arrays 2 und durchstoßen die Zeichenebene in den mit S bezeichneten Schnittpunkten.

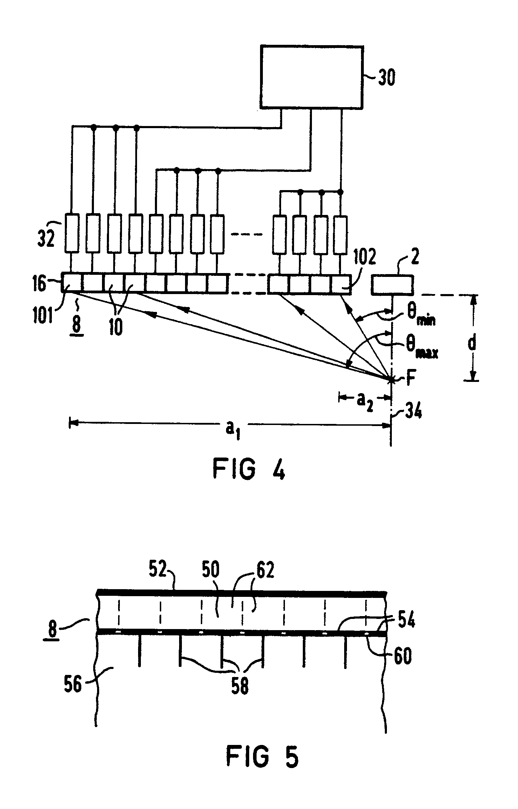

Die einzelnen Wandlerelemente 10 einer Zeile 16 des matrixförmigen Arrays 8 sind gemäß Figur 4 jeweils mit elektronisch steuerbaren Verzögerungsleitungen 32 versehen, so daß mittels einer elektronischen Steuer- und Auswertevorrichtung 30 ein synthetischer Fokus F gebildet werden kann, der elektronisch entlang der Strahlenachse 34 des linearen Arrays 2 verschoben werden kann. Der maximale und minimale Streuwinkel $0_{max}$ bzw. $0_{min}$ hängt dabei sowohl von der Tiefe t des Fokus F als auch von der Entfernung $a_1$ des vom linearen Array 2 am weitesten entfernten Wandlerelementes 101 bzw. von der Entfernung $a_2$ des den linearen Array 2 benachbarten Wandlerelementes unter 2 einer Zeile 16 ab. Die Wandlerelemente 10 einer Zeile 16 können in einer bevorzugten Ausführungsform noch zu mehreren Gruppen zusammengefaßt sein und getrennt voneinander ausgewertet werden, wie es in Figur 4 zur Erläuterung mit jeweils vier Wandlerelementen 10 dargestellt ist. Die Zusammenfassung der von einer Gruppe empfangenen Signale kann auch entgegen der in Figur 4 dargestellten hardwaremäßigen Verdrahtung softwaremäßig im Rechner vorgenommen werden. Dies hat auch den Vorteil, daß die Gruppengröße prinzipiell frei wählbar ist. Die innerhalb einer Zeile gebildeten Gruppen korrespondieren zu unterschiedlichen Streuwinkelbereichen, so daß entsprechend der Gruppenanzahl verschiedene Ultraschall-Bilder erzeugt werden können. Da die Winkelabhängigkeit des Streuquerschnitts kleiner Körper charakteristisch von ihrer geometrischen Abmessung abhängt, kann somit eine Diskriminierung nach der Größe der Streuzentren im Objekt durchgeführt werden. Der Scan in Längsrichtung 3 des linearen Arrays 2 kann dadurch erfolgen, daß sowohl die sendenden Ultraschall-Wandlerelemente 4 als auch die empfangende Zeile 16 schrittweise weitergeschaltet werden. In einer vorteilhaften Ausführungsform kann das lineare Array 2 auch als "phased array" aufgebaut sein mit dem eine Schnittebene des Objekts nach dem Prinzip einer elektronischen Sektorsensor abgetastet wird.

Gemäß Figur 5 ist bei einer vorteilhaften Ausgestaltung eines matrixförmigen Arrays 8, wie sie beispielsweise in der deutschen Offenlegungsschrift 32 24 026 ausführlich offenbart ist, ein Tragkörper 56 für eine PVDF-Folie 50 an einer seiner Seitenflächen mit matrixförmig angeordneten Elektroden 54 versehen, die voneinander durch einen elektrisch isolierenden Zwischenraum 60 getrennt sind. Von den Elektroden 54 führen Verbindungsleiter 58 zu in der Figur nicht dargestellten Vorverstärkern. Auf den Elektroden 54 ist die polarisierte PVDF-Folie 40 angeordnet. Die den Elektroden 54 gegenüberliegende Flachseite der PVDF-Folie 50 ist mit einer elektrisch leitfähigen Schicht 52 versehen. Jeder Elektrode 54 ist somit ein aktiver Volumenbereich 62 zugeordnet, der einem einzelnen Wandlerelement des matrixförmigen Array 8 entspricht. Durch diese Gestaltungsmerkmale lassen sich großflächige und empfindliche Empfangs-Arrays fertigungstechnisch einfach herstellen.

**Patentansprüche**

1. Vorrichtung zum Senden und Empfangen von Ultraschall-Signalen für ein nach dem Impuls-Echo-Verfahren arbeitendes Ultraschall-Bildgerät mit

    a) einem linearen Array (2) aus Ultraschall-Wandlerelementen (4) als Ultraschall-Sender,

    b) einem Array (8) aus Ultraschall-Wandlerelementen (10) als Ultraschall-Empfänger neben wenigstens einer der Seitenflächen des linearen Arrays (2), die parallel zu seiner Längsrichtung (3) und senkrecht zu seiner Sendefläche (6) liegen,
**dadurch gekennzeichnet, daß**

    c) das Array (8) neben wenigstens einer Seitenfläche des linearen Arrays (2) ein matrixförmiges Array bildet, das aus Spalten (14) und Zeilen (16) besteht und dessen

    d) Spalten (14) parallel zur Längsrichtung (3) des linearen Arrays (2) verlaufen und dessen

    e) Zeilen (16) senkrecht zur Längsrichtung (3) des linearen Arrays (2) verlaufen und dessen

    f) Ausdehnung in Längsrichtung (3) wenigstens annähernd gleich der Länge des linearen Arrays (2) ist.

2. Vorrichtung nach Anspruch 1, **dadurch gekennzeichnet**, daß jeweils neben beiden Seitenflächen (5) des linearen Arrays (2) ein matrixförmiges Array (8) angeordnet ist.

3. Vorrichtung nach Anspruch 1 oder 2, **dadurch gekennzeichnet**, daß die Empfangsfläche (12) bzw. die Empfangsflächen (12) der matrixförmigen Arrays (8) und die Sendefläche (6) des linearen Arrays (2) wenigstens annähernd in einer gemeinsamen Ebene (18) liegen.

4. Vorrichtung nach Anspruch 2, **dadurch gekennzeichnet**, daß

    a) die Empfangsflächen (12) der matrixförmigen Arrays (8) und die Sendefläche (6) des linearen Arrays (2) derart gegeneinander geneigt sind, daß

    b) die durch die Empfangsflächen (12) der matrixförmigen Arrays (8) gebildeten Ebenen die durch die Sendefläche (6) des linearen Arrays (2) gebildete Ebene jeweils in einer Geraden schneidet, die parallel zur Längsrichtung (3) des linearen Arrays (2) verläuft und daß

    c) die Neigungswinkel ($\alpha$) zwischen den beiden Empfangsflächen (12) und der Sendefläche (6) jeweils spitz und wenigstens annähernd gleich groß sind.

5. Vorrichtung nach Anspruch 1, **dadurch gekennzeichnet**, daß

    a) die Empfangsfläche (12) des matrixförmigen Arrays (8) und die Sendefläche (6) des linearen Arrays (2) derart gegeneinander geneigt sind, daß

    b) die durch die Empfangsfläche (12) des matrixförmigen Arrays (8) gebildete Ebene die durch die Sendefläche (6) des linearen Arrays (2) gebildete Ebene in einer Geraden schneidet, die parallel zur Längsrichtung (3) des linearen Arrays (2) verläuft und daß

    c) der Neigungswinkel ($\alpha$) zwischen der Empfangsfläche und der Sendefläche spitz ist.

6. Verwendung einer Vorrichtung nach einem der Ansprüche 1 bis 5, **dadurch gekennzeichnet**, daß das lineare Array (2) zusätzlich als Ultraschall-Empfänger vorgesehen ist.

7. Vorrichtung nach einem der Ansprüche 1 bis 5, **dadurch gekennzeichnet**, daß als piezoelektrisch aktiver Bereich der Ultraschall-Wandlerelemente (4) des linearen Arrays (2) ein piezokeramischer Werkstoff vorgesehen ist.

8. Vorrichtung nach einem der Ansprüche 1 bis 5 oder 7, **dadurch gekennzeichnet**, daß der piezoelektrisch aktive Bereich der Ultraschall-Wandlerelemente (10) des matrixförmigen Arrays (8) aus polarisiertem Polyvinylidenfluorid PVDF besteht.

9. Vorrichtung nach Anspruch 8, **dadurch gekennzeichnet**, daß die matrixförmige Anordnung der Ultraschall-Wandlerelemente (10) des matrixförmigen Arrays (8) durch eine zusammenhängende Polyvinylidenfluorid-Folie (50) gebildet wird, die an einer ihrer Flachseiten mit einer matrixförmigen Elektrodenanordnung (54) gekoppelt ist.

**Claims**

1. A device for transmitting and receiving ultrasonic signals for an ultrasonic imaging device operating according to the pulse-echo-method, having

    a) a linear array (2) of ultrasonic transducer elements (4) as an ultrasonic transmitter,

    b) an array (8) of ultrasonic transducer elements (10) as an ultrasonic receiver next to at least one of the side faces of the linear array (2), which faces lie parallel to the longitudinal direction (3) of the linear array and perpendicular to its transmitting face (6),

characterised in that

    c) the array (8) next to at least one side face of the linear array (2) constitutes a matrix-form array, which consists of columns (14) and rows (16) and the

    d) columns (14) of which extend parallel to the longitudinal direction (3) of the linear array (2) and

e) the rows (16) of which extend perpendicular to the longitudinal direction (3) of the linear array (2), and

f) the extent of which in the longitudinal direction (3) is at least approximately equal to the length of the linear array (2).

2. A device according to claim 1, characterised in that respective matrix-form arrays (8) are arranged next to both side faces (5) of the linear array (2).

3. A device according to claim 1 or 2, characterised in that the receiving face (12) or the receiving faces (12) of the matrix-form array (8) and the transmitting face (6) of the linear array (2) lie at least approximately in a common plane (18).

4. A device according to claim 2, characterised in that
   a) the receiving faces (12) of the matrix-form arrays (8) and the transmitting face (6) of the linear array (2) are inclined relative to one other such that
   b) the respective planes formed by the receiving faces (12) of the matrix-form arrays (8) intersect in a straight line extending parallel to the longitudinal direction (3) of the linear array (2) and in that
   c) the respective angles of inclination ($\alpha$) between both receiving faces (12) and the transmitting face (6) are acute and at least approximately equally large.

5. A device according to claim 1, characterised in that
   a) the receiving face (12) of the matrix-form array (8) and the transmitting face (6) of the linear array (2) are inclined relative to one other such that
   b) the plane formed by the receiving face (12) of the matrix-form array (8) intersects the plane formed by the transmitting face (6) of the linear array (2) in a straight line extending parallel to the longitudinal direction (3) of the linear array (2) and in that
   c) the angle of inclination ($\alpha$) between the receiving face and the transmitting face is acute.

6. Use of a device according to one of claims 1 to 5 characterised in that the linear array (2) serves additionally as an ultrasonic receiver.

7. A device according to one of claims 1 to 5, characterised in that a piezoceramic material serves as a piezoelectrically active region of the ultrasonic transducer elements (4) of the linear array (2).

8. A device according to one of claims 1 to 5 or 7, characterised in that the piezoelectrically active region of the ultrasonic transducer elements (10) of the matrix-form array (8) consists of polarised polyvinylidene fluoride PVDF.

9. A device according to claim 8, characterised in that the matrix-form arrangement of the ultrasonic transducer elements (10) of the matrix-form array (8) is formed by a continuous polyvinylidene fluoride foil (50), which is coupled at one of its flat sides to a matrix-form electrode arrangement (54).

**Revendications**

1. Dispositif pour l'émission et la réception de signaux ultrasonores pour un appareil de formation d'images par ultrasons, qui travaille selon le procédé à échos d'impulsions, comprenant
   a) un réseau linéaire (2) formé d'éléments transducteurs à ultrasons (4) constituant un émetteur à ultrasons,
   b) un réseau (8) d'éléments transducteurs à ultrasons (10), constituant un récepteur à ultrasons, à côté d'au moins l'une des surfaces latérales du réseau linéaire (2), qui sont parallèles à la direction longitudinale (3) du réseau et perpendiculaires à sa surface d'émission (6),
   caractérisé par le fait que
   c) le réseau (8) forme, à côté d'au moins une surface latérale du réseau linéaire (2), un réseau en forme de matrice qui est constitué par des colonnes (14) et des lignes (16) et dont
   d) les colonnes (14) sont parallèles à la direction longitudinale (3) du réseau linéaire (2), et
   e) dont les lignes (16) sont perpendiculaires à la direction longitudinale (3) du réseau linéaire (2), et
   f) dont l'étendue dans la direction longitudinale (3) est au moins approximativement égale à la longueur du réseau linéaire (2).

2. Dispositif suivant la revendication 1, caractérisé par le fait qu'un réseau (8) en forme de matrice est disposé respectivement à côté des deux surfaces latérales (5) du réseau linéaire (2).

3. Dispositif suivant la revendication 1 ou 2, caractérisé par le fait que la ou les surfaces de réception (12) du réseau en forme de matrice (8) et la surface d'émission (6) du réseau linéaire (2) sont situées au moins approximativement dans un même plan (18).

4. Dispositif suivant la revendication 2, caractérisé par le fait que

a) les surfaces de réception (12) du réseau en forme de matrice (8) et la surface d'émission (6) du réseau linéaire (2) sont inclinées entre elles de telle sorte que

b) les plans formés par les surfaces de réception (12) du réseau en forme de matrice (8) recoupent le plan formé par la surface d'émission (6) du réseau linéaire (2), respectivement suivant une droite qui est parallèle à la direction longitudinale (3) du réseau linéaire (2), et que

c) les angles d'inclinaison (α) entre les deux surfaces de réception (12) et la surface d'émission (6) sont respectivement des angles aigus, au moins approximativement identiques.

5. Dispositif suivant la revendication 1, caractérisé par le fait que

a) la surface de réception (12) du réseau en forme de matrice (8) et la surface d'émission (6) du réseau linéaire (2) sont inclinées l'une par rapport à l'autre de telle sorte que

b) le plan formé par la surface de réception (12) du réseau en forme de matrice (8) recoupe le plan formé par la surface d'émission (6) du réseau linéaire (2) suivant une droite qui est parallèle à la direction longitudinale (3) du réseau linéaire (2), et que

c) l'angle d'inclinaison (α) entre la surface de réception et la surface d'émission est un angle aigu.

6. Utilisation d'un dispositif suivant l'une des revendications 1 à 5, caractérisé par le fait que le réseau linéaire (2) est prévu en outre en tant que récepteur à ultrasons.

7. Dispositif suivant l'une des revendications 1 à 5, caractérisé par le fait qu'il est prévu, comme zone, active du point de vue piézoélectrique, des éléments transducteurs à ultrasons (4) du réseau linéaire (2), un matériau piézocéramique.

8. Dispositif suivant l'une des revendications 1 à 5 ou 7, caractérisé par le fait que la zone, active du point de vue piézoélectrique, des éléments transducteurs à ultrasons (10) du réseau en forme de matrice (8) est réalisé en fluorure de polyvinylidène PVDF, polarisé.

9. Dispositif suivant la revendication 8, caractérisé par le fait que la disposition matricielle des éléments transducteurs à ultrasons (10) du réseau en forme de matrice (8) est formée par une feuille continue de fluorure de polyvinylidène (50), qui est accouplée, sur l'une de ses faces planes, à un dispositif d'électrodes en forme de matrice (54).

FIG 1

FIG 2

FIG 3

FIG 4

FIG 5